# EUROPÄISCHE PATENTANMELDUNG

(11) **EP 0 525 647 A1**
(43) Veröffentlichungstag der Anmeldung: **03.02.1993**
(21) Anmeldenummer: 92112604.1
(22) Anmeldetag: 23.07.1992
(51) Int. Cl.: B60H 1/00

(54) **Einrichtung zur Beheizung eines Innenraumes eines Reisemobiles, Wohnwagens etc.**

(30) Priorität: 30.07.1991 DE 9109420 U
(71) Anmelder: Strauch, Johannes, D-81737 München (DE)
(72) Erfinder: Strauch, Johannes, D-81737 München (DE)
(74) Vertreter: Grünecker, Kinkeldey, Stockmair & Schwanhäusser Anwaltssozietät

(57) **Zusammenfassung**

Die vorliegende Erfindung betrifft eine Einrichtung zur Beheizung eines Innenraumes eines Reisemobiles, Wohnwagens etc., unter Verwendung eines Kochherdes (1), dessen beheizbare Herdplatte (2) durch einen Deckel (3) abdeckbar ist, wobei zwischen dem Deckel (3) und der Herdplatte (2) des Kochherdes (1) in Längsrichtung desselben zumindest ein an gegenüberliegenden Seiten offener Luftführungskanal gebildet ist, mit dem einseitig ein Luftführungsgehäuse (7) verbindbar ist, mit einem von dem Luftführungsgehäuse (7) abwärts geführten und sich im Bodenbereich des Innenraumes öffnenden Warmluft-Führungsrohr (9), wobei im Luftströmungsweg zwischen dem Luftführungsgehäuse (7) und der bodenseitigen Auslaßöffnung des Warmluft-Führungsrohres (9) eine Luftzirkulationseinrichtung angeordnet ist.

## Beschreibung

Die Erfindung betrifft eine Einrichtung zur Beheizung eines Innenraumes eines Reisemobiles, Wohnwagens etc. unter Verwendung eines Kochherdes, dessen beheizbare Herdplatte durch einen Deckel abdeckbar ist.

Für die Ausrüstung von Wohn- und Campingwagen, Reisemobilen, Caravans etc. ist es üblich, Kochherde mit Herdplatten, zumeist bündig mit einer umgebenden Arbeitsplatte im Innenraum des Reisemobils, Wohnwagens etc. eingebaut, zu verwenden. Als Energiequelle für derartige Kocher dient z.B. Flüssiggas. In jüngerer Zeit sind auch sehr komfortable Kocher bekannt geworden, die mit Petroleum oder Dieseltreibstoff als Heizmedium arbeiten.

Für die Beheizung des Innenraumes solcher Reise- oder Wohnmobile, Campingwagen etc. werden vielfach auch Flüssiggasheizungen für den mobilen Betrieb verwendet, wobei der Gebrauch strengen Bestimmungen im Hinblick auf das erforderliche Luftvolumen, die Belüftung des Innenraumes etc. im Hinblick auf den Umstand unterliegt, daß einerseits das für derartige Heizungen verwendete Flüssiggas schwerer als Luft ist und andererseits die Verbrennung desselben zu Heizzwecken eine hinreichende Sauerstoffzufuhr erfordert. Der Betrieb derartiger Heizungen ist daher nicht immer unproblematisch.

Unter Berücksichtigung der vorerwähnten Schwierigkeiten ist auch bereits vorgeschlagen worden, den naturgemäß innerhalb des Wohnwagens oder Reisemobiles installierten Kochherd zugleich als Heizeinrichtung für den Innenraum zu verwenden.

Bedingt durch die relative Kompliziertheit der bisher verwendeten Kocheinrichtungen selbst, sind aber diese Systeme nicht in wünschenswerter Weise einfach in Handhabung und Wartung. Für einen Kochherd der vorbeschriebenen Art, der mit Diesel oder Petroleum betrieben wird, ist es zur alternativen Verwendung des Herdes als Heizeinrichtung auch bereits bekannt, im Bereich des - bei Nichtgebrauch des Herdes als Kocheinrichtung geschlossenen - Deckels einen Querlüfter anzuordnen, durch den die über der beheizten Herdplatte aufgeheizte Luft nach vorn aus dem Bereich des Herdes herausgeblasen wird.

Eine solche Einrichtung ist jedoch nicht immer hinreichend effizient, da die Warmluft, die ohnehin in den Dachbereich nach oben steigt, nicht an den Stellen, vor allem im Fußbereich, innerhalb des Innenraumes des Reisemobiles oder Wohnwagens zur Verfügung steht, in denen gegebenenfalls die Beheizung in Abhängigkeit von den Außentemperaturen wünschenswert ist. Überdies wird der auf diese Weise in den Raum geblasene Warmluftstrahl auch vielfach als störend im Hinblick auf eine verstärke Luftbewegung im Innenraum des Reisemobiles oder Caravans empfunden.

Der Erfindung liegt daher die Aufgabe zugrunde, eine Einrichtung der eingangs genannten Art derart zu verbessern, daß die Beheizung derartiger Reisemobile unter Verwendung eines ohnehin installierten Kochherdes verbessert und auf eine zusätzliche, spezielle Heizeinrichtung verzichtet werden kann. Zugleich soll eine günstige Luftführung und Zirkulation von Warmluft innerhalb des Innenraumes des Reisemobiles etc. möglich sein.

Die vorgenannte Aufgabe wird erfindungsgemäß dadurch gelöst, daß zwischen dem Deckel und der Herdplatte des Kochherdes in Längsrichtung desselben zumindest ein an gegenüberliegenden Seiten offener Luftführungskanal gebildet ist, mit dem einseitig ein Luftführungsgehäuse verbindbar ist, mit einem von dem Luftführungsgehäuse abwärts geführten und sich im Bodenbereich des Innenraumes öffnenden Warmluft-Führungsrohr, wobei im Luftströmungsweg zwischen dem Luftführungsgehäuse und der bodenseitigen Auslaßöffnung des Warmluft-Führungsrohres eine Luftzirkulationseinrichtung angeordnet ist.

Nach einer bevorzugten Ausführungsform der vorliegenden Erfindung ist das Luftführungsgehäuse zumindest im wesentlichen luftdicht an dem Kochherd, insbesondere dem Deckel desselben, in lösbarer Weise anschließbar. Gegebenenfalls kann das Luftführungsgehäuse auch zwischen dem Dekkel und der Herdplatte des Kochherdes im wesentlichen luftdicht an einer Seite des Kochherdes anschließbar sein.

Vorzugsweise ist ferner als Luftzirkulationseinrichtung ein Tangentialgebläse verwendet, das zwischen dem Luftführungsgehäuse und der Auslaßöffnung des Warmluft-Führungsrohres in einem vorzugsweise abgewinkelten Bereich desselben angeordnet ist.

Weitere, bevorzugte Ausgestaltungen des Erfindungsgegenstandes sind in den übrigen Unteransprüchen dargelegt.

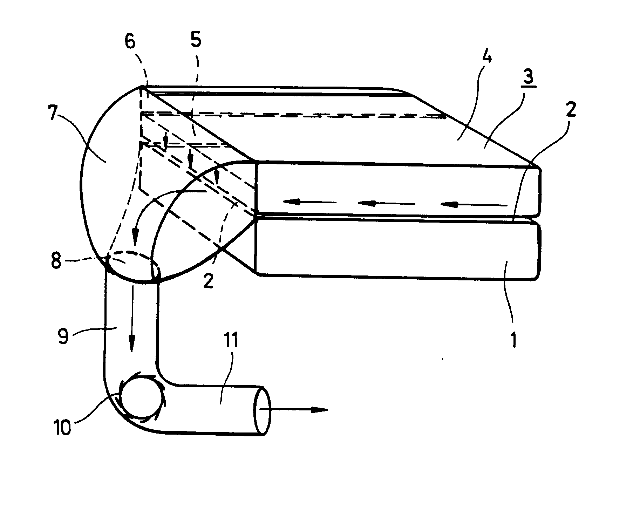

Ein Ausführungsbeispiel der Erfindung wird nachstehend unter Bezugnahme auf die beigefügte Zeichnung erläutert, in der in schematischer Darstellung eine Einrichtung zum Beheizen eines Reisemobiles, Wohnwagens etc. unter Verwendung eines üblicherweise vorgesehenen Kochherdes dargestellt ist.

In der Zeichnung ist mit 1 ein Kochherd bezeichnet, der üblicherweise mit seiner Herdplatte 2 bündig mit einer hier nicht gezeigten Arbeitsplatte im Innenraume eines Reisemobiles oder Wohnwagens angeordnet ist. Der Kochherd wird vorzugsweise mit Diesel oder Petroleum betrieben. Im Nichtgebrauchszustand als Kocheinrichtung kann der Kochherd 1 durch einen Deckel 3 abgedeckt werden, der eine tunnelartige, in Schließstellung umgekehrt U-profilförmige Gestalt besitzt. Der Kochherd 1 besitzt eine prismatische Gestalt mit einer rechteckigen Herdplatte 2, wobei eine obere Deckelplatte 4 des Deckels 3 eine entsprechende Gestalt aufweist, so daß in der Nicht-Gebrauchsstellung des Kochherdes 1 bei heruntergeklapptem oder aufgesetztem Deckel 3 über der Herdplatte 2 ein in der Zeichnung sich in Pfeilrichtung längs über die Herdplatte 2 erstreckender Luftströmungskanal gebildet ist.

Vorzugsweise ist parallel zu der oberen Dekkelplatte 4 des Deckels 3 bzw. in einer geschlossenen Stellung parallel zur Herdplatte 2 innerhalb des Deckels 3 eine Reflexionsplatte 5 mit Abstand sowohl zur Herdplatte 2 als auch zur oberen Deckelplatte 4 des Deckels 3 vorgesehen, die entweder selbst aus wärmereflektierendem Material besteht oder aber an ihrer, der Herdplatte 2 zugewandten Unterseite eine wärmereflektierende Beschichtung trägt, so daß von der Herdplatte 2 abgestrahlte Restwärme oder aber Heizwärme für den Fall, daß der Kochherd 1 als Heizquelle für den Innenraum des Reisemobiles, Wohnwagens etc. verwendet wird, im wesentlichen in Gestalt erwärmter Luft zwischen der Kochplatte 1 und der Reflexionsplatte 5 zur Verfügung steht und die Wärmestrahlung durch die Reflexionsplatte 5 wieder in Richtung zur Herdplatte 2 zurückgeworfen wird.

Vorzugsweise sind die obere Deckelplatte 4 und die Reflexionsplatte 5 durch ein Längsscharnier an einer hinteren, fest mit dem Kochherd 1 verbundenen Seitenwand 6 schwenkbar gelagert. Die Reflexionsplatte 5 kann auch direkt integral mit der schwenkbaren oberen Deckelplatte 4 des Dekkels 3 verbunden sein. Vorzugsweise kann für die obere Deckelplatte 4 auch ein Keramikmaterial gewählt werden.

Zur Verwendung des vorgenannten Kochherdes 1, der mit Petroleum oder Diesel beheizbar ist, als Heizeinrichtung für den Innenraum des Reisemobiles, ist an einer Seite des Kochherdes 1 mit dem hier offenen Deckel 3, gegebenenfalls unter gleichzeitigem luftdichtem Anschluß an der Oberkante der Herdplatte 2, ein Luftführungsgehäuse 7 ansetzbar, das an seiner Unterseite eine Lufteintrittsöffnung 8, die zu einem Warmluft-Führungsrohr 9 führt, aufweist. Im Verlauf des in Richtung zum Bodenbereich des Innenraumes des Wohnwagens oder Reisemobiles geführten Warmluft-Führungsrohres 9 ist als Gebläseeinrichtung ein Tangentialgebläse 10 angeordnet, durch das die Luft in Pfeilrichtung von der Oberseite der Herdplatte 2 durch das unter Beachtung strömungstechnischer Gesichtspunkte mit möglichst niedrigem Strömungswiderstand gestaltete Luftführungsgehäuse 7 hindurch abwärts gesaugt wird und aus einer bodenseitigen Auslaßöffnung 9 des Warmluft-Führungsrohres 9 ausgefördert wird.

Auf diese Weise ist es möglich, den herkömmlich vorgesehenen Kochherd zugleich als Heizeinrichtung für den Innenraum des Wohnwagens zu verwenden, ohne daß eine separate Heizeinrichtung vorgesehen werden muß. Zugleich ist diese kombinierte Koch-/Heizeinrichtung ohne zusätzliche Voraussetzungen und Anforderungen an das im Innenraum vorhandene Sauerstoffvolumen betreibbar. Überdies kann die Einrichtung zur Beheizung des Wohnwagens unter Verwendung eines herkömmlichen Tangentialgebläses 10, das mit großem Luftdurchsatz und Praktisch geräuschfrei sowie mit äußerst geringer Leistungsaufnähme arbeitet, ausgestaltet werden. Durch den Anschluß des Luftführungsgehäuses 7 und die Warmluft-Saugabführung von der Herdplatte 2 des in diesem Fall zu Heizzwecken eingeschalteten Kochherdes 1 ermöglicht es, den Warmluftstrom tatsächlich zu nahezu beliebigen Stellen im Bodenbereich des Wohnwagens zu führen und auf diese Weise eine angemessene Luftzirkulation durch die innerhalb des Innenraumes aufsteigende Warmluft sicherzustellen.

Für die Ausgestaltung des Luftführungsgehäuses sowie des Warmluft-Führungsrohres können die jeweiligen Anforderungen an den speziellen Einsatzfall in nahezu beliebiger Weise berücksichtigt werden, so daß die Auslaßöffnung, aus der bei Betrieb des Kochherdes als Heizeinrichtung unter gleichzeitiger Einschaltung des Tangentialgebläses die Warmluft ausströmt, an einer praktisch beliebigen Stelle im Bodenbereich des Innenraumes des Reisemobiles oder Wohnwagens angeordnet werden kann. Es ist selbstverständlich auch möglich, mit dem Luftführungsgehäuse 7 mehrere Warmluft-Führungsrohre oder auch flexible Warmluft-Führungsschläuche in Verbindung mit einem oder mehreren Tangentialgebläsen zu verwenden, um so eine Warmluftzufuhr zu mehreren Stellen des Bodenbereiches gleichzeitig zu erreichen. Es können überdies auch geeignete Gebläse anderer Bauart verwendet werden.

Das Luftführungsgehäuse 7 besteht vorzugsweise aus Stahloder Aluminiumblech und kann auch als Drückerteil gestaltet werden. Gegebenenfalls kann in Verbindung mit einem kocherseitigen Ansatzflansch, z.B. aus Metall, auch ein wärmebeständiger Kunststoff, für die Gestaltung des Luftführungsgehäuses verwendet werden, dessen innerer Strömungswiderstand für die aus dem Bereich zwischen der Herdplatte 2 und dem Deckel 3, insbesondere der Reflexionsplatte 5, abgesaugten Warmluft, möglichst gering gehalten ist.

Durch die vorliegende Erfindung erfolgt eine Querstrom-Absaugung von Warmluft aus dem Herdplattenbereich in den Bodenbereich des Innenraumes mit Hilfe eines Gebläses, insbesondere Tangentialgebläses, um Warmluft aus dem Bereich zwischen der Herdplatte 2 des Kochherdes 1 und dem Deckel 3 anzusaugen und durch die im Bodenbereich des Innenraumes des Wohnwagens, Reisemobiles etc. befindliche Auslaßöffnung des Warmluft-Zuführungsrohres 9 auszustoßen.

Hierdurch wird ein äußerst effizientes Heizungssystem für Campingfahrzeuge etc. geschaffen, wobei eine vergleichbare Einrichtung auch zur Beheizung stationärer Zelte verwendet werden kann, in denen ein entsprechender Kochherd verwendet wird. Da die Leistungsaufnähme des vorzugsweise verwendeten Tangentialgebläses sehr gering, bereitet auch dann die Bereitstellung einer mobilen Spannungsversorgung, z.B. in Verbindung mit einer Fahrzeugbatterie, keine Probleme.

## Patentansprüche

1. Einrichtung zur Beheizung eines Innenraumes eines Reisemobiles, Wohnwagens etc., unter Verwendung eines Kochherdes, dessen beheizbare Herdplatte durch einen Deckel abdeckbar ist, dadurch gekennzeichnet, daß zwischen dem Deckel (3) und der Herdplatte (2) des Kochherdes (1) in Längsrichtung desselben zumindest ein an gegenüberliegenden Seiten offener Luftführungskanal gebildet ist, mit dem einseitig ein Luftführungsgehäuse (7) verbindbar ist, mit einem von dem Luftführungsgehäuse (7) abwärts geführten und sich im Bodenbereich des Innenraumes öffnenden Warmluft-Führungsrohr (9), wobei im Luftströmungsweg zwischen dem Luftführungsgehäuse (7) und der bodenseitigen Auslaßöffnung (11) des Warmluft-Führungsrohres (9) eine Luftzirkulationseinrichtung (10) angeordnet ist.

2. Einrichtung nach Anspruch 1, dadurch gekennzeichnet, daß das Luftführungsgehäuse (7) zumindest im wesentlichen luftdicht an dem Kochherd (1), insbesondere dem Deckel (3), anschließbar ist.

3. Einrichtung nach Anspruch 1 oder 2, dadurch gekennzeichnet, daß das Luftführungsgehäuse (7) eine strömungstechnisch angepaßte Innengestaltung mit geringem Strömungswiderstand zur Führung einer Saugluftströmung zwischen der Herdplatte (2) und dem Deckel (3) sowie innerhalb des Luftführungsgehäuses (7) zu dem Warmluft-Führungsrohr (9) aufweist und das Warmluft-Führungsrohr (9) an einer dem Boden des Innenraumes zugewandten Seite des Luftführungsgehäuses (7) angeschlossen ist.

4. Einrichtung nach zumindest einem der vorhergehenden Ansprüche 1 bis 3, dadurch gekennzeichnet, daß das Warmluft-Führungsrohr (9) stromauf der Auslaßöffnung (11) abgewinkelt ist und in dem abgewinkelten Bereich die Luftzirkulationseinrichtung (10) angeordnet ist.

5. Einrichtung nach zumindest einem der vorhergehenden Ansprüche 1 bis 4, dadurch gekennzeichnet, daß die Luftzirkulationseinrichtung ein Tangentialgebläse (10) ist.

6. Einrichtung nach zumindest einem der vorhergehenden Ansprüche 1 bis 5, dadurch gekennzeichnet, daß der Kochherd (1) eine im wesentlichen prismatische Gestalt aufweist und der Deckel (3) in Gestalt eines umgekehrten U-Profiles über der Herdplatte (2) des Kochherdes (1) angeordnet ist.

7. Einrichtung nach zumindest einem der vorhergehenden Ansprüche 1 bis 6, dadurch gekennzeichnet, daß der Deckel (3) parallel, jedoch beabstandet zu einer oberen Deckelplatte (4) des Deckels (3), sowie in geschlossenem Zustand, parallel zur Herdplatte (2) des Kochherdes (1) einen Zwischenboden (5) aus wärmereflektierendem Material und/oder mit einer der Herdplatte (2) zugewandten, wärmereflektierenden Beschichtung aufweist.

8. Einrichtung nach zumindest einem der vorhergehenden Ansprüche 1 bis 7, dadurch gekennzeichnet, daß das Luftführungsgehäuse (7) ein Metallgehäuse aus Stahl- oder Aluminiumblech, vorzugsweise ein Drückerteil, ist.

9. Einrichtung nach zumindest einem der vorhergehenden Ansprüche 1 bis 8, dadurch gekennzeichnet, daß der wärmereflektierende Zwischenboden (5) sowie die Deckelplatte (4) durch Scharniere an einer aufrechten Seitenwand (6) des Kochherdes (1) gelagert sind.

10. Einrichtung nach Anspruch 8, dadurch gekennzeichnet, daß zumindest die obere Dekkelplatte (4) aus Keramik besteht.
